# FASCICULE DE BREVET EUROPEEN

(11) **EP 2 522 822 B1**
(45) Date de publication et mention de la délivrance du brevet: **21.06.2017**
(21) Numéro de dépôt: 12164597.2
(22) Date de dépôt: 18.04.2012
(51) Int. Cl.: F01N 3/021, F01N 3/20, F01N 13/02

(54) **Système comportant un moteur à combustion, un ensemble en « U » de traitement des gaz d'échappement, et un écran thermique optimisé**
System mit einem Verbrennungsmotor, einer U-Einheit zur Abgasnachbehandlung und einem optimisierten Hitzeschild
System comprising a combustion engine, a U-shaped unit for the treatment of exhaust gases, and an optimised heat shield

(30) Priorité: 09.05.2011 FR 1153948
(43) Date de publication de la demande: 14.11.2012
(73) Titulaire: PEUGEOT CITROËN AUTOMOBILES SA, 78140 Vélizy-Villacoublay (FR)
(72) Inventeur: Lere, Sylvain, 75018 PARIS (FR); Ferrand, Nicolas, 92000 Nanterre (FR); Cereijo, Manuel, 75020 PARIS (FR)

(56) Documents cités:
- EP-A1- 1 162 098
- EP-A1- 1 947 307
- WO-A2-2006/076963
- JP-A- 2005 155 404
- US-A1- 2010 187 383

## Description

L'invention porte sur le domaine des écrans thermiques pour la protection de l'environnement immédiat autour de moyens de traitement des gaz d'échappement d'un moteur à combustion ainsi que le maintien en température de tels moyens.

Les émissions polluantes des moteurs à combustion équipant les véhicules automobiles sont réglementées par des normes de plus en plus sévères. Les polluants réglementés sont, selon la technologie de moteur à combustion considérée, le monoxyde de carbone (CO), les hydrocarbures imbrûlés (HC), les oxydes d'azotes (NOₓ), et les particules.

Il est connu d'employer un certain nombre de moyens de dépollution dans la ligne d'échappement des moteurs à combustion pour en limiter les émissions de polluants réglementés. Un catalyseur d'oxydation permet le traitement du monoxyde de carbone, des hydrocarbures imbrûlés, et dans certaines conditions des oxydes d'azotes ; un filtre à particules peut être employé pour le traitement des particules de suie.

On désigne de manière générale ces dispositifs par le terme de moyens de « post-traitement » des gaz d'échappement.

Par exemple, pour satisfaire aux normes anti-pollution sur les émissions d'oxydes d'azote (NOₓ), un système spécifique de post-traitement peut être introduit dans la ligne d'échappement des véhicules, notamment des véhicules équipés de moteurs à mélange pauvre, c'est-à-dire du type diesel ou à allumage commandé fonctionnant avec un mélange stratifié (mélange carburé non-homogène présentant un taux de carburant inférieur à la stoechiométrie). Pour le traitement des oxydes d'azote (NOₓ), on connaît des technologies de réduction catalytique sélective, ou « SCR » pour « selective catalytic reduction », qui consistent à réduire les NOₓ par introduction d'un agent réducteur (ou d'un précurseur d'un tel agent réducteur) dans les gaz d'échappement. Il peut par exemple s'agir d'une solution d'urée, dont la décomposition va permettre l'obtention d'ammoniac qui servira d'agent réducteur, mais également d'un réducteur ou d'un précurseur d'un tel réducteur sous forme gazeuse. On parlera dans la suite du présent document d'une manière générale de « réducteur » pour désigner un agent réducteur ou un précurseur d'agent réducteur.

Classiquement, le catalyseur SCR est placé sous la caisse du véhicule, loin du moteur car le réducteur injecté nécessite un long parcours dans la ligne d'échappement pour se décomposer d'une part, et des volumes libres suffisants pour être implanté d'autre part. Si la distance parcourue par le réducteur n'est pas suffisante le risque d'encrassement de la ligne d'échappement est important.

Or, s'il est placé loin de la sortie du collecteur d'échappement du moteur, ou de la sortie de la turbine dans le cas d'un moteur suralimenté, le catalyseur SCR peut ne pas être actif dès les premières secondes de fonctionnement du véhicule, et laisse alors passer une quantité importante d'oxydes d'azote non traités. De même, l'injecteur de réducteur, qui nécessite d'atteindre un certain niveau de température pour être opérationnel (amorçage suffisant de la décomposition du précurseur d'urée (adblue) ou préchauffage du système de mise à disposition de réducteur (gaz)), souffre de cet éloignement de la sortie du collecteur d'échappement.

Il est connu du document EP1947307A1 un système regroupant les mêmes éléments de dépollution dans une architecture compacte en « U ». De tels dispositifs peuvent être totalement implantés en sous-capot moteur, comme divulgué dans le document EP1162098A1.

L'adoption d'un tel dispositif de post-traitement offre, outre des avantages en termes de performances des moyens de post-traitement, des avantages en termes d'implantation des systèmes dans le véhicule, en supprimant tout moyen de post-traitement de la zone sous-plancher du véhicule.

Il est par ailleurs connu d'isoler thermiquement des moyens de post-traitement implantés sous caisse, afin d'y maintenir des conditions thermiques favorable et pour protéger de la chaleur les pièces situées dans leur environnement proche. Il également connu de prévoir un écran thermique sur le collecteur d'échappement et sur un catalyseur monté en sortir du collecteur, au travers par exemple du document WO2006/076963A2 ou du brevet EP1577516.

Aucune solution connue dans l'état de la technique n'est spécifiquement optimisée pour un ensemble de dépollution présentant une architecture compacte en « U ». C'est l'objet de l'invention que de proposer un écran thermique ainsi optimisé.

L'invention part de la constatation qu'un écran thermique réalisé selon les techniques connues, à savoir entourant les branches du « U » formé par l'ensemble de traitement des gaz d'échappement est problématique pour plusieurs raisons. D'une part, elle impacte la géométrie de l'ensemble de traitement en imposant une distance importante entre les deux branches du « U ». Pour une application automobile, les écrans ayant généralement un encombrement d'au moins 10 mm par rapport à la paroi isolée, cela conduit à écarter les branches du « U » d'au moins 20mm, uniquement pour permettre l'encapsulation de chacune des branches. Par ailleurs, une surface d'isolant importante est nécessaire puisque chaque pain est encapsulé dans l'écran, l'écran formant un doublage intégral de l'enveloppe de l'ensemble de post traitement. Cela est coûteux, et présente une masse importante.

Pour arriver à l'objet de l'invention, la demanderesse a constaté les points remarquables suivants, qui vont l'encontre de l'application de l'enseignement dérivé de l'état de la technique connu.

D'une part, dans un ensemble de dépollution comprenant des éléments de dépollutions regroupés dans une architecture en « U », tous les éléments mis en jeu ont besoin de conditions thermiques favorables pour être efficaces. Un catalyseur d'oxydation doit être maintenu autant que possible au dessus de sa température d'amorçage, il en va de même pour un catalyseur SCR, le réducteur se diffuse et se décompose d'autant mieux dans les gaz d'échappement qu'ils sont chauds, et un filtre à particules a besoin d'atteindre une température élevée pour se régénérer (éliminer les suies stockées par oxydation). De même, toute déperdition thermique au niveau du turbocompresseur est préjudiciable au bon fonctionnement des éléments de dépollutions. Tous les éléments doivent donc être si possible isolés thermiquement. Mais contrairement à ce que suggère l'application de l'état de la technique, il n'apparait pas nécessaire d'isoler séparément chaque élément, puisque le maintien d'une température élevée est favorable pour tous les éléments de dépollution.

Par ailleurs, un ensemble de traitement des gaz d'échappement en U est particulièrement adapté à être mis en oeuvre en étant positionné dans un espace sous-capot moteur d'un véhicule automobile, le long d'une face latérale d'un moteur à combustion. La demanderesse a constaté que, d'une manière générale, l'isolation des moyens de traitement des gaz d'échappement vis-à-vis de la face du moteur (bloc moteur et/ou culasse) n'était pas nécessaire, le moteur pouvant constituer un élément de l'encapsulation des moyens de post-traitement.

En outre, du fait de la compacité de l'ensemble de dépollution, les écrans nécessaires à l'encapsulation des différents éléments de traitement des gaz d'échappement sont nombreux, doivent être construits avec de faibles tolérances géométriques pour pouvoir être mis en position les uns par rapport aux autres lors de l'assemblage de l'ensemble de traitement des gaz d'échappement.

Enfin, si les dispositifs de traitement sont isolés un à un par le fournisseur des dispositifs de dépollution, la pièce finale une fois assemblée est d'autant plus lourde, ce qui en complique la manipulation en usine terminale de montage.

Partant de ces inconvénients issus de l'état de la technique et des constats techniques ci-dessus évoqués, la demanderesse a développé un écran thermique optimisé pour ensemble de traitement des gaz d'échappement compact en U, pour son application dans l'espace sous capot d'un véhicule automobile. Cet écran thermique optimisé prend place dans un système objet de l'invention, comportant un moteur à combustion, un ensemble de traitement des gaz d'échappement en « U », et ledit écran thermique.

Plus précisément, l'invention porte donc sur un système comportant :
- un moteur à combustion, et
- un ensemble de post-traitement des gaz d'échappement du moteur, comportant des moyens de traitement des hydrocarbures imbrûlés, du monoxyde de carbone, des oxydes d'azote, et des particules, l'ensemble présentant une architecture en « U » ;
ledit ensemble de post-traitement étant fixé à une face du moteur,
et dans lequel le système comporte en outre un écran thermique conformé et positionné de sorte que l'ensemble de post-traitement est contenu dans une cavité, formée entre la face du moteur à laquelle l'ensemble de post-traitement est fixé et l'écran thermique, l'écran thermique étant conformé pour épouser sensiblement la forme de l'ensemble de post-traitement, sur sa face opposée à la face du moteur sur laquelle l'ensemble est fixé, et l'écran thermique étant formé d'un seul tenant.

De préférence, l'ensemble de post-traitement (1) comporte en outre un turbocompresseur (13).

Selon l'invention, l'écran thermique est conformé pour épouser sensiblement la forme de l'ensemble de post-traitement, sur sa face opposée à la face du moteur sur laquelle l'ensemble est fixé. Cela permet de limiter l'encombrement du système, de lui garantir une bonne efficacité dans la conservation thermique à l'intérieur de la cavité formée entre le moteur et l'écran, et qui contient l'ensemble de traitement des gaz d'échappement, et permet également de faciliter le positionnement de l'écran lors de son montage en usine terminale.

Toujours selon l'invention, l'écran thermique est formé d'un seul tenant.

De préférence, le système comporte des moyens de fixation de l'écran thermique sur le moteur. Cela garantit une certaine étanchéité entre l'écran et le moteur, et limite les déperditions thermiques. Le mode de fixation peut être simple, par exemple à l'aide de vis serrées dans des bossages créés à cet effet dans le carter du moteur.

Dans une variante, le système comporte des moyens de fixation de l'écran thermique sur l'ensemble de post-traitement.

Selon un mode de réalisation, l'écran comporte une feuillure en métal gaufré.

L'écran peut comporter de la laine céramique.

Les moyens de traitement des hydrocarbures imbrûlés, des oxydes d'azote, et des particules, peuvent respectivement être :
- un catalyseur d'oxydation, un catalyseur de réduction catalytique sélective des oxydes d'azote, et un filtre à particules, ou
- un catalyseur d'oxydation et un filtre à particules portant une imprégnation de réduction catalytique sélective des oxydes d'azote.

L'invention porte également sur un véhicule automobile comportant un système selon l'une des revendications précédentes implanté dans un espace sous-capot moteur. L'invention permet ainsi la protection thermique des autres accessoires disposés dans l'espace sous capot du véhicule.

L'invention est décrite plus en détail ci-après et en référence aux figures représentant schématiquement le système dans son mode de réalisation préférentiel.

La figure 1 présente schématiquement un ensemble de post-traitement du type mis en jeu dans un système selon l'invention.

La figure 2 présente schématiquement un système conforme à un mode de réalisation de l'invention selon une première vue.

La figure 3 présente schématiquement le système représenté en figure 2, selon une seconde vue.

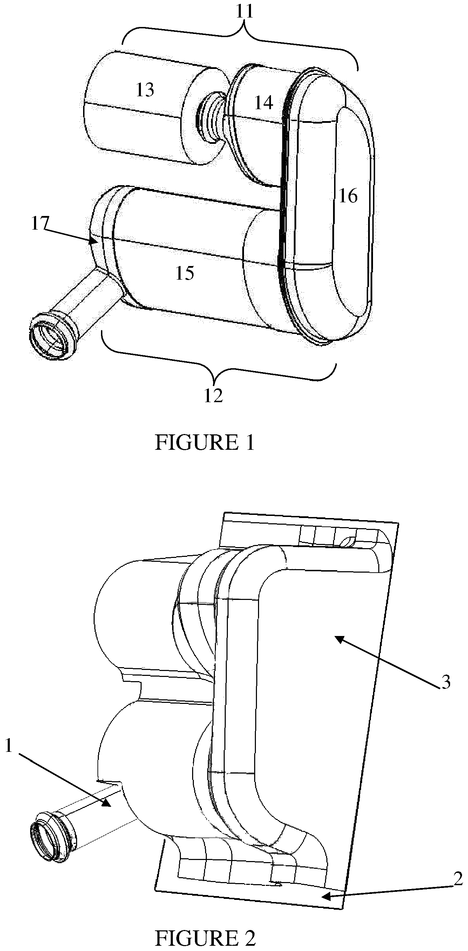

La figure 1 présente, selon une vue extérieure schématique en 3 dimensions, un ensemble de post-traitement 1 des gaz d'échappement du type mis en jeu dans un système conforme à l'invention, c'est-à-dire présentant une architecture en U. Un tel ensemble comporte une première branche 11 et une seconde branche 12.

La première et la seconde branche sont sensiblement parallèles de sorte à former les deux branches d'une architecture en « U ». La notion de forme en « U » ne doit cependant pas s'interpréter de manière trop restrictive, de sorte qu'une forme sensiblement plus proche d'un « V » peut entrer dans la définition d'un ensemble mis en jeu dans l'invention.

Dans l'exemple d'ensemble de post-traitement ici représenté, la première branche comporte un turbocompresseur 13 et, dans une enveloppe ou « canning » appropriée, un catalyseur d'oxydation 14. Le catalyseur d'oxydation sert principalement au traitement des hydrocarbures imbrûlés (HC) et du monoxyde de carbone (CO) dans le cadre d'un moteur Diesel.

La seconde branche 12 comporte les moyens de post-traitement des oxydes d'azote et des particules ici sous la forme d'un unique monolithe dit « FAP/SCR » 15, à savoir un filtre à particules portant une imprégnation de réduction catalytique sélective des oxydes d'azote. Cette seconde branche pourrait alternativement comporter un catalyseur SCR et un filtre à particules.

Le filtre à particules est préférentiellement d'un type mettant en jeu un additif permettant d'abaisser la température d'oxydation des suies. Cette caractéristique permet au filtre de se régénérer à des températures plus basses qu'un filtre dit « catalysé » (désignant un filtre n'employant pas d'additif d'abaissement de la température d'oxydation des suies).

La première branche 11 est reliée à la seconde branche par un raccord fluidique 16 permettant le transport des gaz d'échappement de la sortie de la première branche vers l'entrée de la seconde branche (les notions d'entrée et de sortie se comprenant dans l'ensemble du présent document selon le sens d'écoulement des gaz d'échappement dans l'ensemble selon l'invention).

Le raccord 16 confère à l'ensemble en U, dans l'optique d'une application automobile et de manière préférentielle, une largeur maximale de 600mm et pourra notamment lui conférer une largeur de l'ordre de 380mm. La largeur du U désigne la largeur hors tout entre les deux branches.

La notion de « U » ne préjuge pas l'orientation de l'ensemble de post-traitement en utilisation. Ainsi, dans une application automobile, les première et seconde branche pourront (et seront généralement) positionnées sensiblement horizontalement.

Dans la variante ici présentée, le raccord 16 est constitué d'une plaque de liaison entre la première branche 11 et la seconde branche 12, et d'une coupelle creuse formant ainsi un corps creux faisant raccord.

Un mélangeur peut, selon la variante de l'invention considérée, être disposé dans la seconde branche en amont du catalyseur SCR ou du monolithe FAP/SCR.

La seconde branche inclut également un convergent de sortie 17 afin de canaliser les gaz d'échappement traités par l'ensemble de post-traitement. Ce convergent présente préférentiellement une évacuation latérale. Cela permet d'en limiter la longueur et d'orienter le flux des gaz d'échappement de manière adéquate.

La figure 2 représente schématiquement un système conforme à un mode de réalisation de l'invention selon une première vue en trois dimensions, sensiblement du même angle de vue que la représentation de l'ensemble de post-traitement de la figure 1.

Dans l'invention, le système comporte un ensemble de post traitement en « U » (dont on n'aperçoit sur la figure 2 que la conduite en sortie du convergent de sortie 17, le reste de l'ensemble de post traitement 1 étant masqué par l'écran thermique 3 détaillé ci-après), un moteur à combustion, ici figuré de manière très schématique par sa face 2 sur laquelle est fixé l'ensemble de post-traitement 1.

Dans l'invention, un écran thermique 3 est conformé pour créer, en coopération avec la face 2 du moteur à laquelle l'ensemble de post-traitement est fixé, une cavité dans laquelle est contenu l'ensemble de post-traitement 1. La face 2 du moteur à laquelle l'ensemble de post-traitement est fixé constitue donc un côté de la cavité, et l'écran est sensiblement en forme de coupelle, dont un côté ouvert vient se positionner le long de la face 2 du moteur à laquelle l'ensemble de post-traitement est fixé. Une fois formée, la cavité peut présenter une (ou plusieurs) ouverture pour le passage des conduites d'amenée et de sortie des gaz d'échappement.

L'écran 3 est préférentiellement fixé à la face 2 du moteur à laquelle l'ensemble de post-traitement est fixé, de sorte à assurer une certaine étanchéité vis-à-vis de celle-ci et limiter les déperditions thermiques. La fixation pourra par exemple être réalisée à l'aide de vis, au niveau de bossages créés sur le carter du moteur.

Dans la variante préférentielle de l'invention ici représentée, l'écran thermique 3, qui peut être fabriqué d'un seul tenant, est conformé pour épouser sensiblement la forme de l'ensemble de post-traitement 1, sur sa face opposée à la face 2 du moteur sur laquelle l'ensemble 1 est fixé. Cette caractéristique permet une grande efficacité dans la fonction de maintien en température des éléments de post-traitement, et permet une mise en place aisée et précise de l'écran 3 lors de son montage, notamment grâce à la forme galbée de la zone de l'écran qui est destinée à prendre position entre les deux branches du « U » de l'ensemble de post traitement 1.

Différentes constitutions sont envisageables pour l'écran thermique 3. Il peut notamment comprendre une ou plusieurs feuilles en métal gaufré, et contenir de la laine de céramique, matériau reconnu pour sa résistance aux hautes températures et sa capacité d'isolation thermique. On pourra utiliser de la laine céramique présentant une densité de l'ordre de 128kg/m³.

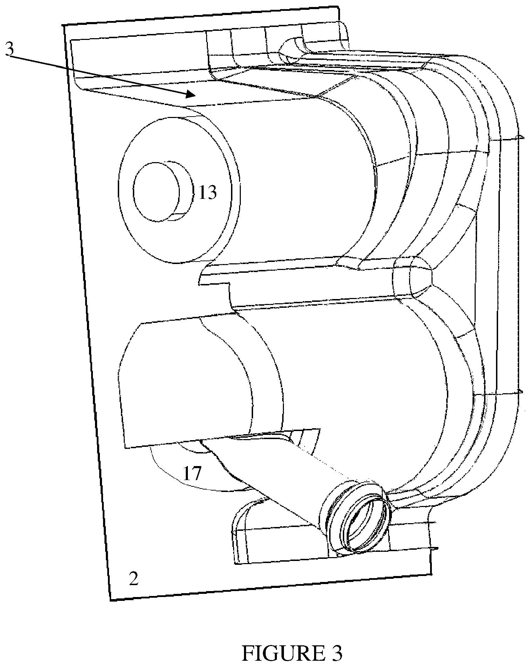

La figure 3 présente une vue schématique en trois dimension du même système, selon un second point de vue. Au premier plan, on y voit partiellement le turbocompresseur 13 ainsi que le convergent de sortie 17, sous l'écran 3. Cette vue permet de constater comment il est possible de laisser au niveau de la cavité formée entre la face 2 du moteur sur laquelle l'ensemble 1 est fixé des ouvertures pour permettre le branchement des conduites d'amenée et de sorties sur l'ensemble de post-traitement 1.

De préférence, ces ouvertures sont positionnées à l'opposé de la façade du moteur présentant ses accessoires (courroies de transmission et/ou d'accessoires, pompe à huile, pompe à eau, etc.).

L'invention ainsi développée présente de nombreux avantages. De manière non exhaustive, on pourra noter que l'adoption de l'invention limite le nombre de pièces à employer, car une seule référence est à gérer au lieu de 6 au minimum si l'ensemble était isolé thermique par des moyens conventionnels (2 pièces par pain ou monolithe de traitement, donc au minimum 4 pièces, plus une pièce d'isolation du coude et une casquette d'isolation en bout de filtre à particules). Corollairement, le coût de l'outillage nécessaire à la mise en oeuvre de l'écran est diminué. Le montage de l'écran en usine terminale est également simplifié. Enfin, l'écran, outre ses caractéristiques purement techniques liées à l'isolation, peut également faire office d'écran dit « cache style », c'est-à-dire à vocation esthétique, ou de support à un tel cache style.

## Revendications

1. Système comportant :
- un moteur à combustion, et
- un ensemble de post-traitement (1) des gaz d'échappement du moteur, comportant des moyens de traitement des hydrocarbures imbrûlés, du monoxyde de carbone, des oxydes d'azote, et des particules, l'ensemble présentant une architecture en « U » ;
ledit ensemble de post-traitement (1) étant fixé à une face (2) du moteur,
**caractérisé en ce que** le système comporte en outre un écran thermique (3) conformé et positionné de sorte que l'ensemble de post-traitement (1) est contenu dans une cavité, formée entre la face (2) du moteur à laquelle l'ensemble de post-traitement est fixé et l'écran thermique (3), l'écran thermique étant conformé pour épouser sensiblement la forme de l'ensemble de post-traitement, sur sa face opposée à la face du moteur sur laquelle l'ensemble est fixé, et l'écran thermique étant formé d'un seul tenant.

2. Système selon la revendication 1, dans lequel l'ensemble de post-traitement (1) comporte en outre un turbocompresseur (13).

3. Système selon l'une des revendications précédentes, comportant des moyens de fixation de l'écran thermique sur le moteur.

4. Système selon l'une des revendications précédentes, comportant des moyens de fixation de l'écran thermique sur l'ensemble de post-traitement.

5. Système selon l'une des revendications précédentes, dans lequel l'écran comporte une feuillure en métal gaufré.

6. Système selon l'une des revendications précédentes, dans lequel l'écran comporte de la laine céramique.

7. Système selon l'une des revendications précédentes, dans lequel les moyens de traitement des hydrocarbures imbrûlés, des oxydes d'azote, et des particules, sont respectivement :
- un catalyseur d'oxydation, un catalyseur de réduction catalytique sélective des oxydes d'azote, et un filtre à particules, ou
- un catalyseur d'oxydation et un filtre à particules portant une imprégnation de réduction catalytique sélective des oxydes d'azote.

8. Véhicule automobile comportant un système selon l'une des revendications précédentes implanté dans un espace sous-capot moteur.

## Patentansprüche

1. System, umfassend:
- einen Verbrennungsmotor, und
- eine Nachbehandlungseinheit (1) der Abgase des Motors, die Mittel zum Behandeln der Kohlenwasserstoffe, des Kohlenmonoxids, der Stickstoffoxide und der Partikel, die unverbrannt sind umfasst, wobei die Einheit einen "U"-Aufbau aufweist,
wobei die Nachbehandlungseinheit (1) an einer Seite (2) des Motors befestigt ist,
**dadurch gekennzeichnet, dass** das System außerdem einen Hitzeschild (3) umfasst und der derart positioniert ist, dass die Nachbehandlungseinheit (1) in einem Hohlraum enthalten ist, der zwischen der Seite (2) des Motors, an der die Nachbehandlungseinheit befestigt ist, und dem Hitzeschild (3) gebildet ist, wobei der Hitzeschild ausgestaltet ist, um sich im Wesentlichen an die Form der Nachbehandlungseinheit auf ihrer der Seite des Motors entgegengesetzten Seite, auf der die Einheit befestigt ist, anzulegen, wobei der Hitzeschirm aus einem einzigen Stück geformt ist.

2. System nach Anspruch 1, wobei die Nachbehandlungseinheit (1) außerdem einen Turboverdichter (13) umfasst.

3. System nach einem der vorhergehenden Ansprüche, das Mittel zum Befestigen des Hitzeschilds auf dem Motor umfasst.

4. System nach einem der vorhergehenden Ansprüche, das Mittel zum Befestigen des Hitzeschilds auf der Nachbehandlungseinheit umfasst.

5. System nach einem der vorhergehenden Ansprüche, wobei der Schirm eine Fuge aus Riffelmetall umfasst.

6. System nach einem der vorhergehenden Ansprüche, wobei der Schirm Keramikwolle umfasst.

7. System nach einem der vorhergehenden Ansprüche, wobei die Mittel zum Behandeln der Kohlenwasserstoffe, Stickstoffoxide und Partikel, die unverbrannt sind, jeweils Folgendes sind:
- ein Oxidationskatalysator, ein Katalysator zur selektiven katalytischen Reduktion der Stickstoffoxide und ein Partikelfilter, oder
- ein Oxidationskatalysator und ein Partikelfilter, das eine Imprägnierung zur selektiven katalytischen Reduktion der Stickstoffoxide trägt.

8. Kraftfahrzeug, das ein System nach einem der vorhergehenden Ansprüche, das in einem Raum unter der Motorhaube untergebracht ist, umfasst.

## Claims

1. A system comprising:
- a combustion engine, and
- a post-treatment assembly (1) of the exhaust gases of the engine, comprising means for processing unburnt hydrocarbons, carbon monoxide, nitrogen oxides and particles, the assembly have a U-shaped architecture;
said post-treatment assembly (1) being fixed to a face (2) of the engine,
**characterized in that** the system further comprises a heat shield (3) shaped and positioned such that the post-treatment assembly (1) is contained in a cavity, formed between the face (2) of the engine to which the post-treatment assembly is fixed, and the heat shield (3), the heat shield being shaped to substantially fit the shape of the post-treatment assembly, on its opposite face to the face of the engine on which the assembly is fixed, and the heat shield being formed in one piece.

2. The system according to Claim 1, in which the post-treatment assembly (1) further comprises a turbocharger (13).

3. The system according to one of the preceding claims, comprising means for fixing the heat shield on the engine.

4. The system according to one of the preceding claims, comprising means for fixing the heat shield on the post-treatment assembly.

5. The system according to one of the preceding claims, in which the screen comprises a rebate of embossed metal.

6. The system according to one of the preceding claims, in which the shield comprises ceramic wool.

7. The system according to one of the preceding claims, in which the treatment means of the unburnt hydrocarbons, the nitrogen oxides and the particles are respectively:
- an oxidation catalyst, a selective catalytic reduction catalyst of nitrogen oxides, and a particle filter, or
- an oxidation catalyst and a particle filter carrying an impregnation of selective catalytic reduction of nitrogen oxides.

8. A motor vehicle comprising a system according to one of the preceding claims, installed in an under-bonnet space.
